(19) Europäisches Patentamt / European Patent Office / Office européen des brevets

(11) **EP 3 488 306 B1**

(12) **FASCICULE DE BREVET EUROPEEN**

(45) Date de publication et mention de la délivrance du brevet:
**13.04.2022 Bulletin 2022/15**

(21) Numéro de dépôt: **17751803.2**

(22) Date de dépôt: **20.07.2017**

(51) Classification Internationale des Brevets (IPC):
**G05B 23/02** $^{(2006.01)}$  **G05B 15/02** $^{(2006.01)}$

(52) Classification Coopérative des Brevets (CPC):
**G05B 23/0267;** G05B 2219/163; G05B 2219/2642

(86) Numéro de dépôt international:
**PCT/FR2017/051980**

(87) Numéro de publication internationale:
**WO 2018/015669 (25.01.2018 Gazette 2018/04)**

(54) **PROCÉDÉ DE CONFIGURATION, DE CONTRÔLE OU DE SUPERVISION D'UNE INSTALLATION DOMOTIQUE**

VERFAHREN ZUR KONFIGURATION, STEUERUNG ODER ÜBERWACHUNG EINER HEIMAUTOMATIONSANLAGE

METHOD FOR CONFIGURING, CONTROLLING OR MONITORING HOME AUTOMATION EQUIPMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2016 FR 1656993**

(43) Date de publication de la demande:
**29.05.2019 Bulletin 2019/22**

(73) Titulaire: **Overkiz**
**74370 Metz-Tessi (FR)**

(72) Inventeur: **POGNANT, Sylvain**
**74600 Seynod (FR)**

(74) Mandataire: **Germain Maureau**
**12, rue Boileau**
**69006 Lyon (FR)**

(56) Documents cités:
**WO-A1-2015/106766  US-A1- 2005 200 474**
**US-A1- 2009 062 964  US-A1- 2015 127 165**
**US-B1- 9 152 737  US-B2- 8 781 633**

## Description

### Domaine de l'invention

La présente invention concerne un procédé de configuration et un procédé de supervision d'une installation domotique.

### Art antérieur

Une installation domotique d'un bâtiment peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Une pluralité de dispositifs domotiques appartenant à plusieurs installations domotiques distinctes peut être supervisée ou maintenue par des opérateurs de maintenance. Ceux-ci doivent procéder à des opérations de maintenance préventive ou de réparation lors d'un disfonctionnement d'un dispositif.

Ces opérations nécessitent des déplacements pour procéder aux opérations, ainsi qu'une surveillance sur site ou à distance qui demande un temps important. De ce fait, il est possible que les opérations de maintenance ou de réparation ne soient pas exécutées dans un délai satisfaisant en raison du nombre de dispositifs à superviser. Il est également possible que les opérations ne correspondent pas à une situation nécessitant cette intervention. En effet, pour que la supervision soit efficace, il convient que les opérateurs de maintenance soient en mesure de prévoir et de détecter la survenance d'un disfonctionnement sur la base des informations communiquées et/ou de leur évolution, ce qui nécessite une interprétation complexe desdites informations de supervision.

Le document D1 (US 2009/062964 A1) décrit un procédé de configuration d'une unité de gestion reliée à une installation domotique. Le document D2 (US 8781633 B2) décrit un procédé et un système pour le contrôle et la gestion d'un système appartenant à une installation comprenant un équipement connecté à un élément de réseau. Les documents D1 et D2 ne divulguent pas un procédé efficace de supervision d'une installation domotique.

La présente invention a pour but de résoudre tout ou partie des inconvénients mentionnés ci-dessus.

### Exposé de l'invention

A cet effet, la présente invention concerne un procédé selon la revendication 1.

Grâce aux dispositions selon l'invention, une notification peut être communiquée à un utilisateur du deuxième type lorsque la condition de déclenchement d'une alerte est remplie, sur la base d'une configuration réalisée par un utilisateur du premier type. Ainsi, la mise en place de la maintenance des dispositifs domotiques est facilitée en limitant ou ciblant de façon plus pertinente les interventions de maintenance ou de réparation sur site. En effet, le procédé met en œuvre une configuration qui permet à un premier utilisateur d'un premier type de définir au moins une alerte définissant une condition de déclenchement d'une notification destinée à être envoyée à l'utilisateur possédant un profil du deuxième type lorsque la condition de déclenchement est remplie pour un dispositif compris dans l'ensemble associé à l'utilisateur possédant un profil du deuxième type. Un utilisateur expert du premier type peut ainsi définir des alertes pertinentes pour des types de dispositifs, de façon à ce que les utilisateurs du deuxième type puissent être alertés à bon escient en cas de prévision d'un dysfonctionnement et optimiser ainsi les opérations de maintenance. Il est à noter que l'on entend par configuration la création ou la mise à jour d'une alerte.

Une alerte correspond au déclenchement d'une notification et/ou d'une action lors de la réalisation d'une condition de déclenchement portant sur au moins une variable d'état pour un dispositif domotique, un type de dispositif domotique ou une liste de types de dispositifs domotiques.

La condition de déclenchement contient une référence à au moins une variable d'état d'un dispositif. La condition de déclenchement peut aussi prendre en compte une ou plusieurs variables externes, correspondant par exemple à une valeur affectée par défaut et personnalisable par instance de dispositif. La condition de déclenchement peut également prendre en compte des valeurs précédentes d'une ou plusieurs variables d'état de dispositifs, en exploitant une capacité d'historisation de l'unité de gestion afin de mettre en place un algorithme et par exemple, d'estimer une vitesse de variation en détermination une dérivée ou de procéder à une détection d'anomalie par analyse statistique.

La condition de déclenchement peut être associée à une notion d'hystérésis temporelle ou d'hystérésis à effet de seuil sur la variation d'un ou plusieurs paramètres mesurés. Cette hystérésis permet de ne pas déclencher une alerte de façon abusive lorsque les paramètres mesurés sont sujets à fluctuation.

La condition de déclenchement de l'alerte peut être définie sous la forme d'une expression d'un langage évaluable, interprété ou compilé, par le serveur.

Ce langage peut être un langage simple permettant de décrire des expressions booléennes, en comprenant en particulier des opérateurs de comparaison et des opérateurs booléens, ou un langage de programmation complet.

Une alerte peut être associée à un niveau d'alerte ou niveau de priorité de l'alerte ; A titre d'exemple, une alerte peut correspondre à un niveau d'information ou à une alerte concernant un problème bloquant sur l'installation.

Une notification correspond ainsi à un envoi d'information relatif au déclenchement d'une alerte à un utilisateur, selon un mode de communication variable. Les notifications peuvent être communiquées au fil de l'eau ou collectée dans une interface que l'utilisateur peut consulter lorsqu'il le souhaite. Une combinaison de différents modes de communication de la notification peut également être mise en place. Ainsi, le mode de communication pour les notifications peut être divers, par exemple par SMS, par email, ou sur une interface de communication dédiée.

Il est possible d'être notifié sur l'apparition de l'alerte mais aussi sur le retour à la normale en détectant lorsque la condition de déclenchement est remplie, mais également d'obtenir une notification lorsque la condition cesse d'être remplie.

Une action peut être définie en cas de réalisation de la condition, correspondant par exemple à une commande sur un dispositif, en particulier un réglage / la mise en place d'un mode dégradé, ou encore une mise hors service ou un blocage du dispositif.

Selon un aspect de l'invention, l'unité de gestion est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Le ou les premiers utilisateurs possédant un premier type de profil correspondent à un utilisateur expert qui crée l'alerte. Ce premier type de profil d'utilisateur dispose de droits étendu sur l'ensemble des dispositifs d'un type donné. Il peut s'agir notamment du fabricant des dispositifs ou d'un distributeur des dispositifs domotiques.

Le ou les deuxièmes utilisateurs possédant un deusième type de profil correspondent à un utilisateur qui peut s'abonner à une alerte. Il peut s'agir notamment d'un installateur ou d'un agent de maintenance qui possède des droits sur des dispositifs qu'il doit superviser, notamment à distance.

Au sens de la présente invention, un dispositif domotique est un équipement domotique et/ou un capteur, ou encore une partie d'équipement domotique ou une partie de capteur correspondant à un sous-ensemble fonctionnel. Un dispositif domotique peut également correspondre à un point de commande d'autres dispositifs domotiques.

Au sens de la présente invention, un type de dispositifs domotiques correspond à une catégorie de dispositifs identiques, similaires ou partageant des caractéristiques et au moins une définition d'une variable d'état. A titre d'exemple, un type peut correspondre à un modèle particulier de volet roulant, d'alarme ou de portail.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :

- au moins une unité de traitement pour contenir et exécuter au moins un programme d'ordinateur,
- au moins un module de communication destinée au contrôle et/ou à la commande d'au moins un dispositif domotique ; et
- au moins un module de communication avec l'unité de gestion.

L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques.

Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Au sens de la présente invention, une variable d'état est un élément descriptif de l'état d'un dispositif domotique. La valeur d'une variable d'état peut correspondre à la marche ou à l'arrêt pour un interrupteur, ou à un degré ou pourcentage d'ouverture pour un volet. Par ailleurs, une variable d'état peut correspondre à une valeur de mesure d'un capteur, par exemple à une valeur d'une grandeur physique ou d'environnement. La description des états des dispositifs peut être générique ou spécialisée, en fonction du protocole local. Les identifiants des variables d'état peuvent être numériques ou alphanumériques. Les valeurs des variables d'états peuvent utiliser des formats ou des échelles personnalisées ou propriétaires.

Au sens de la présente invention, une commande correspond à un ordre pouvant être donné à un dispositif domotique en vue de la réalisation d'une action par ce dispositif ou de l'obtention en retour d'une information, par exemple d'une information relative à une variable d'état de ce dispositif.

Selon un aspect de l'invention, l'étape de déclaration est effectuée sur la base d'instructions du deuxième utilisateur. Selon un autre aspect de l'invention, l'étape de déclaration peut également être effectuée de façon automatique sur la base d'une liste d'utilisateurs du deuxième type et des dispositifs associés.

Selon un aspect de l'invention, le procédé comprend l'étape suivante :

- Enregistrement d'une première correspondance entre ladite alerte et ledit dispositif domotique, ledit groupe de dispositifs domotiques, ledit type de dispositif domotique ou ledit groupe de types de dispositifs domotiques ;

Selon un aspect de l'invention, le procédé comprend l'étape suivante :

- Enregistrement d'une deuxième correspondance entre l'au moins un dispositif appartenant à l'ensemble de dispositifs domotiques et un utilisateur.

Selon un aspect de l'invention, le procédé comprend en outre l'étape suivante :

- Définition d'une configuration personnalisée d'une alerte attachée à un dispositif ou un groupe de dispositif, par le deuxième utilisateur possédant un profil utilisateur d'un deuxième type.

Un utilisateur du premier type peut définir la condition de façon variable. Un utilisateur du deuxième type peut alors modifier des alertes créées par un utilisateur du premier type pour les dispositifs dont il a la supervision.

Selon un aspect de l'invention, le procédé comprend une étape de configuration d'une alerte correspondant au déclenchement d'une notification d'alerte et/ou d'une action lors de la réalisation d'une condition de déclenchement portant sur au moins une variable d'état pour le type de dispositif domotique ou le groupe de types de dispositifs domotiques; l'étape de configuration d'une alerte étant réalisée sur la base d'au moins une instruction d'un premier utilisateur possédant un profil utilisateur d'un premier type.

A titre d'exemple, une condition peut être définie par un utilisateur du premier type avec un seuil variable, associé optionnellement à une contrainte. Par exemple, le seuil pourrait être modifié entre les bornes d'un intervalle. Dans ce cas, la configuration personnalisée peut correspondre à un choix de valeur de seuil dans une condition, en donnant une valeur de seuil personnalisée, comprise entre les bornes de l'intervalle.

Selon un aspect de l'invention, le procédé comprend l'étape suivante :

- Mise à disposition de l'utilisateur possédant un profil d'un premier type d'une première interface de configuration d'une Alerte et de la condition de déclenchement correspondante.

Selon un aspect de l'invention, la première interface est agencée pour permettre la sélection des types de dispositifs et/ou des variables d'état pour configurer une alerte et/ou la condition de déclenchement correspondante.

Selon un aspect de l'invention, le procédé comprend en outre l'étape suivante :

- Mise à disposition de l'utilisateur possédant un profil d'un deuxième type d'une deuxième interface de sélection d'installations, de dispositifs / des paramètres ou variables d'état.

Par l'intermédiaire de cette interface, un utilisateur du deuxième type peut notamment procéder à la définition d'un mode de communication pour les notifications, par exemple par SMS, par email, ou sur une interface de communication dédiée. Une combinaison de mode de communication peut également être envisagée. A titre d'exemple, une notification SMS ou email peut être envoyée avec un lien vers une page d'une interface de supervision.

L'utilisateur du deuxième type peut également procéder à une définition des notifications d'alertes qu'il souhaite recevoir par type de dispositif mais également par instance de dispositif supervisé.

La seconde interface permet optionnellement de procéder à la configuration personnalisée des alertes.

La présente invention concerne également un procédé de supervision d'une installation domotique comprenant au moins un dispositif domotique et au moins une unité centrale de commande, le procédé étant exécuté par une unité de gestion reliée à ladite installation et comprenant les étapes suivantes :

- Réception d'un message de supervision en provenance d'un dispositif domotique et/ou d'unité centrale de commande, le message de supervision comprenant une information relative à une valeur d'au moins une variable d'état de l'au moins un dispositif domotique ;
- Détermination d'au moins une alerte présentant une condition de déclenchement à évaluer pour le dispositif domotique ; une alerte correspondant au déclenchement d'une notification et/ou d'une action lors de la réalisation d'une condition de déclenchement portant sur au moins une variable d'état pour un dispositif domotique ;

- Evaluation de la condition de déclenchement de l'alerte ;
- Détermination d'au moins un utilisateur à notifier en fonction d'une correspondance entre le dispositif et ledit utilisateur, dans le cas où la condition de déclenchement est remplie ;
- Emission d'au moins un message de notification à destination de l'au moins un utilisateur dans le cas où la condition de déclenchement est remplie.

Selon un aspect de l'invention, le procédé de supervision comprend les étapes du procédé de configuration sont réalisées préalablement à l'étape de réception d'un message de supervision.

Selon un aspect de l'invention, l'étape de réception d'un message peut être successive à une première étape d'envoi d'un message d'interrogation ou de polling. Alternativement, l'envoi du message peut être initié par le dispositif domotique de façon autonome, par exemple en détectant un évènement modifiant la valeur d'une variable d'état. Le polling peut également être réalisé à l'initiative de l'unité centrale de commande, avant d'envoyer une notification au Serveur.

Selon un aspect de l'invention, l'étape d'identification du type peut être basée par exemple sur une consultation d'une information envoyée dans le message de supervision, comme un identifiant.

Selon un aspect de l'invention, l'étape de détermination des alertes présentant une condition à évaluer peut être réalisée sur la base des correspondances enregistrées lors de la configuration. Selon un aspect de l'invention, Il est possible de réduire le nombre de conditions à évaluer en considérant la ou des variables d'état concernées par les Condition et en les comparant avec la variable d'état mise à jour.

Selon un aspect de l'invention, une notification peut être associée à un contexte, ou des valeurs à communiquer, et/ou à un niveau d'alerte.

Selon un aspect de l'invention, le procédé comprend une étape d'identification d'un type du dispositif domotique concerné par le message de supervision, l'étape de détermination des alertes présentant une condition à évaluer, est réalisée sur la base du type du dispositif domotique.

Selon un aspect de l'invention, l'au moins une alerte est configurée par un premier utilisateur possédant un profil d'un premier type, et l'étape de détermination d'un utilisateur à notifier correspond à la détermination d'un deuxième utilisateur d'un deuxième type.

Selon un aspect de l'invention, le serveur peut procéder à une sauvegarde du déclenchement de l'alerte pour constituer un historique des alertes.

Selon un aspect de l'invention, le procédé comprend l'étape suivante :

- Envoi d'un message à l'unité centrale de commande U en vue du déclenchement de l'exécution d'une action, en particulier d'une action sur le dispositif domotique.

Selon un aspect de l'invention, le procédé comprend l'étape suivante :

- Stockage des valeurs de l'au moins une variable d'état.

Ces dispositions permettent l'évaluation de conditions de déclenchement portant sur plusieurs variables qui ne sont pas envoyées en même temps et/ou de baser des conditions sur un historique de valeurs.

Selon un aspect de l'invention, le procédé comprend l'étape suivante :

- Vérification de l'existence d'une configuration personnalisée de l'alerte par dispositif par un deuxième utilisateur possédant un profil du deuxième type.

Selon un aspect de l'invention, le procédé comprend l'étape suivante :

- Vérification de l'existence d'une configuration propre à l'utilisateur concernant un souhait de réception de notification afin de déterminer si une notification est envoyée ou non.

Les différents aspects définis ci-dessus non incompatibles peuvent être combinés.

## Brève description des figures

L'invention sera mieux comprise à l'aide de la description détaillée qui est exposée ci-dessous en regard du dessin annexé dans lequel :

La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur;
La figure 3 est un schéma illustrant un mode de mise en œuvre d'un procédé de configuration d'une installation domotique selon l'invention.
La figure 4 est un schéma illustrant un mode de mise en œuvre d'un procédé de supervision d'une installation domotique selon l'invention.

## Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

**Description d'un système comprenant une installation domotique**

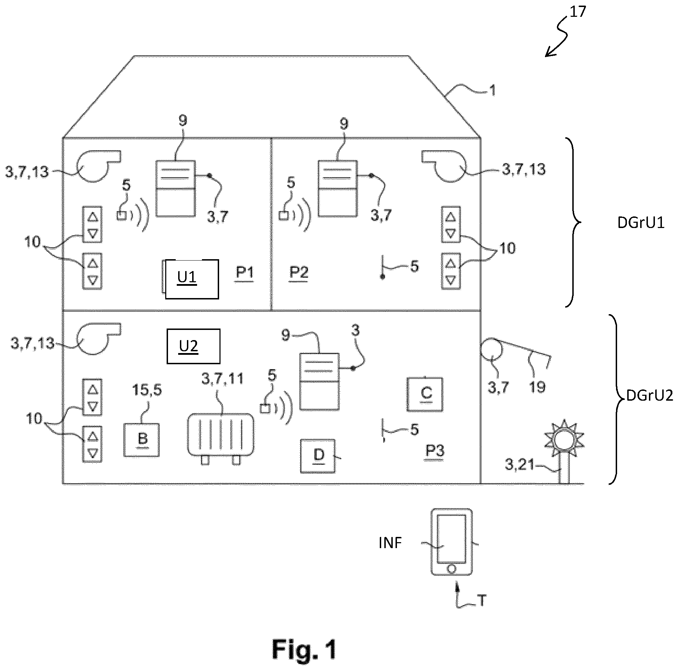

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique 17 comprend une unité centrale de commande ou une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

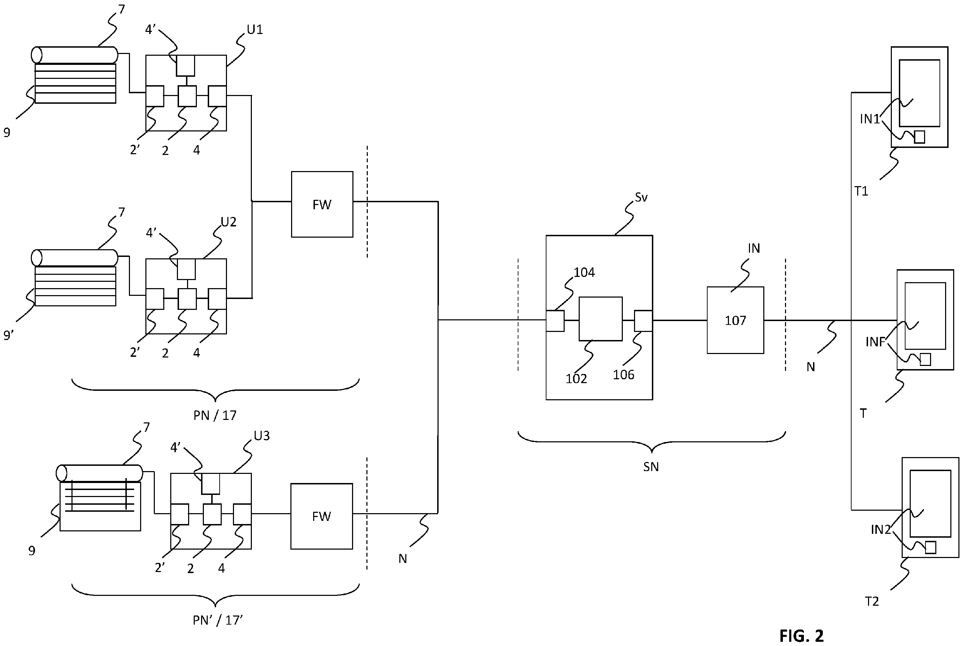

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un deuxième réseau privé PN', indépendant du réseau privé PN correspondant à une deuxième installation domotique 17'. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1, selon le premier protocole de communication local P1.

A titre d'exemple, le module de communication 2' peut être agencé pour mettre en œuvre par exemple un ou plusieurs des premiers protocoles locaux P1 par exemple de type Z-Wave, EnOcean, IO Homecontrol, Somfy RTS, KNX, MODBUS, Wavenis, Philips HUE. Ces premiers protocoles locaux sont des protocoles de communication locaux en général non IP.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U peut comprendre, en outre, un module de communication 4' pour communiquer selon un deuxième protocole de communication cible P2, avec un terminal de communication mobile T. Le deuxième protocole de communication cible peut par exemple être un protocole de communication au dessus du protocole IP sur un réseau local, ou encore un protocole générique point à point. A titre d'exemple, le protocole applicatif WEAVE utilisant des protocoles de transport 6lowpan et thread pour un réseau maillé peuvent constituer un deuxième protocole cible. D'autres exemple incluent Bluetooth, Zigbee ou Wifi.

Le terminal de communication T peut contenir et exécuter un logiciel d'application APP.

Chaque unité centrale de commande U comprend, en outre, un module de communication 4 avec le serveur Sv. Le serveur Sv permet la commande et/ou le contrôle à distance et comprend une ou plusieurs unités de traitement 102 agéncée pour contenir et exécuter un deuxième programme d'ordinateur.

Dans certaines applications, une unité centrale de commande U peut communiquer avec le serveur Sv à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle INF permettant à un utilisateur final de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle INF comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

**Identifiant unique d'un dispositif domotique**

Le serveur Sv et les unités centrales de commandes U peuvent utiliser un identifiant unique pour identifier les dispositifs domotiques. La structure d'un identifiant unique d'un dispositif domotique DURL va être à présent décrite de façon correspondante à un mode de réalisation particulier.

Selon ce mode de réalisation, l'identifiant unique d'un dispositif domotique comprend des informations sur :

- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif appartient à un groupe de dispositifs D associés à une même adresse. Les dispositifs qui sont une expression unique d'une adresse ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :

protocol : identifiant du protocole local de dispositif natif;
gatewayId : identifiant de la première unité centrale de commande U, par exemple un numéro de série ou un identifiant unique.

rawDeviceAddress : un chemin simple ou à plusieurs niveaux. Sa signification et son format dépendent du schéma d'adressage du protocole de communication local du dispositif D.

subsystemId : ce champ optionnel indique une identification, par exemple un rang du sous-système (démarrant par exemple à 1), si un tel sous-système est présent.

### *Exemples*

1) knx://0201-0001-1234/1.1.3

Cet identifiant unique DURL correspond à un dispositif D communiquant par le protocole KNX avec une adresse individuelle 1.1.3 accessible par l'unité centrale de commande U portant l'identifiant #0201-0001-1234.

2) io://0201-0001-1234/145036#2

Cet identifiant unique GDURL correspond à un sous-système portant le n°2 associé à un dispositif D communiquant par le protocole io homecontrol avec une adresse radio 145036 accessible par l'unité centrale de commande U portant l'identifiant #0201-0001-1234.

### Premier et deuxième types d'utilisateurs

Comme cela est représenté sur la figure 2, le serveur Sv peut communiquer avec des terminaux en possession de deux types d'utilisateurs qui ne sont pas nécessairement le ou les utilisateurs finaux de l'installation 17.

En particulier, le serveur Sv peut interagir avec au moins un premier utilisateur Usr1 possédant un profil utilisateur d'un premier type UsrT1. Le premier type d'utilisateur UsrT1 correspond à un utilisateur expert qui dispose de droits étendus sur l'ensemble des dispositifs D d'un type donné DT. Il peut s'agir notamment du fabricant des dispositifs ou d'un distributeur des dispositifs domotiques concernés.

A cet effet, une interface IN1 est mise à disposition par le serveur Sv. L'accès à cette interface peut être réalisé par une application exécutée sur un terminal utilisateur T1 du premier utilisateur Usr1, ou par un accès par un client léger.

Le serveur Sv interagit également avec au moins un deuxième utilisateur Usr2 possédant un profil utilisateur d'un deuxième type UsrT2. Le deuxième type d'utilisateur Usr2 correspond notamment à un installateur ou à un agent de maintenance qui possède des droits sur des dispositifs qu'il doit superviser, notamment à distance.

A cet effet, une interface IN2 est mise à disposition par le serveur Sv. L'accès à cette interface peut être réalisé par une application exécutée sur un terminal utilisateur T2 du deuxième utilisateur, ou par un accès par un client léger.

Par la suite, nous désignerons par utilisateur du premier type UsrT1 un utilisateur possédant un profil utilisateur du premier type UsrT1 et par utilisateur du deuxième type UsrT2 un utilisateur possédant un profil utilisateur du deuxième type UsrT2.

### Procédé de configuration

### *Premier mode de mise en œuvre*

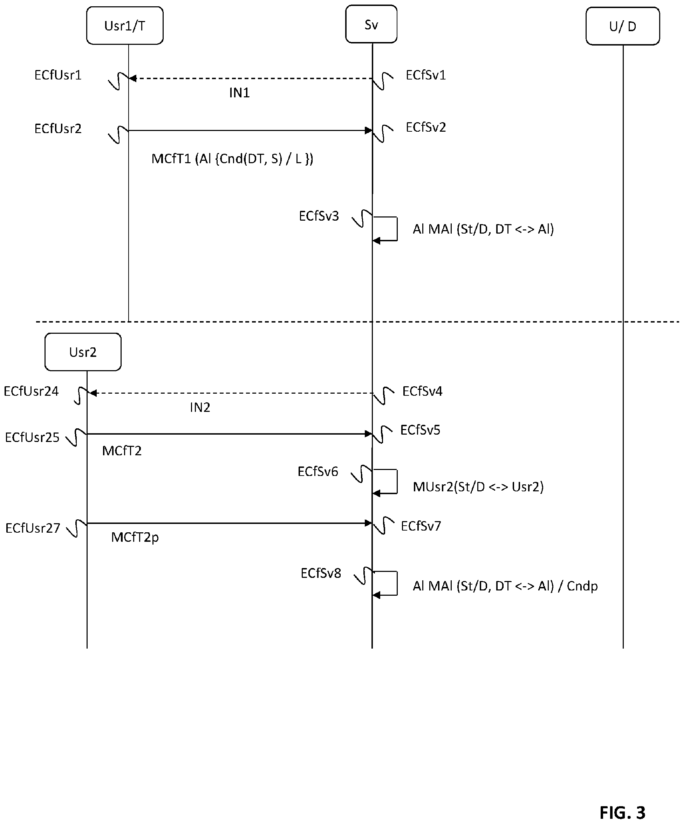

Nous allons à présent décrire un premier mode de réalisation d'un procédé de configuration d'une installation domotique 17 en référence à la figure 3, le procédé étant exécuté par le serveur Sv.

Dans une étape EcfSv1, le Serveur Sv met à disposition d'un premier utilisateur Usr1 du premier type UsrT1 l'interface IN1, notamment pour la sélection des types de dispositifs / des paramètres ou variables d'état afin de permettre la configuration d'une Alerte Al et de la condition de déclenchement correspondante Cnd.

Dans une étape EcfUsr2, l'utilisateur Usr1 du premier type procède à la création et/ou la configuration d'une alerte Al.

Une alerte Al correspond au déclenchement d'une notification N et/ou d'une action Ac lors de la réalisation d'une condition portant sur au moins une variable d'état S pour un dispositif D, un type de dispositif DT ou une liste de types de dispositifs DT si l'au moins une variable d'état S est supportée par les dispositifs concernés. Le premier utilisateur Usr1 dispose de droits étendus sur l'ensemble des dispositifs D ou types de dispositifs DT concernés par l'alerte Al afin de pouvoir créer et configurer celle-ci.

La condition de déclenchement Cnd de l'alerte Al peut être définie sous la forme d'une expression d'un langage évaluable, interprété ou compilé, par le serveur.

Ce langage peut être un langage simple permettant de décrire des expressions booléennes, en comprenant en particulier des opérateurs de comparaison et des opérateurs booléens, ou un langage de programmation complet.

La condition de déclenchement Cnd contient une référence à au moins une variable d'état S d'un dispositif D. La condition de déclenchement Cnd peut aussi prendre en compte une ou plusieurs variables externes, correspondant par exemple à une valeur affectée par défaut et personnalisable par instance de dispositif. La condition de déclenchement Cnd peut également prendre en compte des valeurs précédentes d'une ou plusieurs variables d'état de dispositifs D, en exploitant la capacité d'historisation du serveur Sv afin, par exemple, d'estimer une vitesse de variation en déterminant une dérivée ou de procéder à une détection d'anomalie par analyse statistique.

La condition de déclenchement Cnd peut être associée à une notion d'hystérésis temporelle ou d'hystérésis à effet de seuil sur la variation d'un ou plusieurs paramètres mesurés. Cette hystérésis permet de ne pas déclencher une alerte de façon abusive lorsque les paramètres mesurés sont sujets à fluctuation.

Une alerte Al peut être associée à un niveau d'alerte ou niveau de priorité de l'alerte ; A titre d'exemple, une alerte peut correspondre à un niveau d'information ou à une alerte concernant un problème bloquant sur l'installation.

Il est possible d'être notifié sur l'apparition de l'alerte mais aussi sur le retour à la normale en détectant lorsque la condition de déclenchement est remplie, mais également d'obtenir une notification lorsque la condition cesse d'être remplie.

Il est possible de définir la condition de façon constante ou variable, par exemple avec un seuil variable T, associé optionnellement à une contrainte. Par exemple, le seuil pourrait être modifié entre les bornes d'un intervalle. Ces dispositions permettent une personnalisation comme cela sera décrit ultérieurement.

Une action Ac peut être définie en cas de réalisation de la condition, correspondant par exemple à un réglage / la mise en place d'un mode dégradé, ou encore une mise hors service ou un blocage du dispositif.

Une condition Cnd peut prendre en compte des données historiques sur une variable d'état afin de mettre en place un algorithme. Il est possible également de combiner plusieurs variables d'état S dans la condition.

Des exemples de conditions Cnd seront décrits ultérieurement.

Dans une étape EcfSrv3, le Serveur enregistre l'alerte Al ainsi qu'au moins une correspondance MAI entre ladite Alerte Al et les dispositifs D, groupes de dispositifs, type ou groupes de types de dispositifs DT, l'installation ou le groupe d'installations. Le serveur peut ainsi maintenir, à titre d'exemple, une ou plusieurs tables de correspondance entre des installations ou des dispositifs ou types de dispositifs et les alertes qui peuvent s'appliquer.

Dans une étape EcfSv4, le Serveur met à disposition l'interface utilisateur IN2 à au moins un utilisateur d'un deuxième type, notamment pour la sélection d'installations, de dispositifs / des paramètres ou variables d'état.

Le deuxième type d'utilisateur Usr2 correspond à un utilisateur qui peut s'abonner à une alerte. Il peut s'agir notamment d'un installateur ou d'un agent de maintenance qui possède des droits sur des dispositifs qu'il doit superviser, notamment à distance.

Optionnellement, une ou plusieurs alertes Al créées par un utilisateur du premier type peuvent être modifiées par un utilisateur du deuxième type UsrT2 pour les dispositifs D dont il a la supervision.

Dans une étape ECfUsr25, un utilisateur Usr2 possédant un profil d'un deuxième type procède à une déclaration des installations St et ou des dispositifs D qu'il supervise. Cette étape de déclaration peut également être effectuée de façon automatique sur la base d'une liste d'utilisateurs du deuxième type et des dispositifs D et/ou installations St associées.

Lors de cette étape, un utilisateur du deuxième type peut notamment procéder à la définition d'un mode de communication pour les notifications, par exemple par SMS, par email, ou sur une interface de communication dédiée. Une combinaison de modes de communication peut également être envisagée. A titre d'exemple, une notification SMS ou email peut être envoyée avec un lien vers une page d'une interface de supervision.

L'utilisateur du deuxième type Usr2 peut également procéder à une définition des notifications d'alertes qu'il souhaite recevoir par type de dispositif DT mais également par instance de dispositif D supervisé. Cette définition correspond à une personnalisation du profil de l'utilisateur. L'utilisateur du second type peut également procéder à une personnalisation des alertes sur les dispositifs domotiques dont il a la supervision.

Dans une étape ECfSv6, à réception du message de configuration MCfT2, le serveur procède à un enregistrement de la correspondance MUsr2 entre une installation St ou un dispositif D et un utilisateur de deuxième type Usr2. Le serveur peut ainsi maintenir, à titre d'exemple, une ou plusieurs tables de correspondance entre les installations ou des dispositifs et les utilisateurs du deuxième type en charge de la supervision de ces dispositifs ou installations.

Dans une étape ECfUsr27, un utilisateur du deuxième type Usr2 peut procéder à une configuration personnalisée par dispositif D, par groupe de dispositif D ou par installation St d'une alerte Al attachée à ce dispositif D, groupe de dispositif, Installation St ou groupe d'installation. Dans ce cas, il convient que l'utilisateur du premier type ait donné la possibilité de modifier l'Alerte Al à des utilisateurs du deuxième type. A titre d'exemple, la configuration personnalisée peut correspondre à un choix de valeur de seuil dans une condition Cnd, en donnant une valeur de seuil personnalisée Tp.

Cette personnalisation Cndp peut être stockée dans une étape EcfSv28 de façon liée à un dispositif avec la correspondance MAI, ou encore en lien avec l'utilisateur Usr2 en lien avec la correspondance MUsr.

## Procédé de supervision

### Premier mode de mise en œuvre

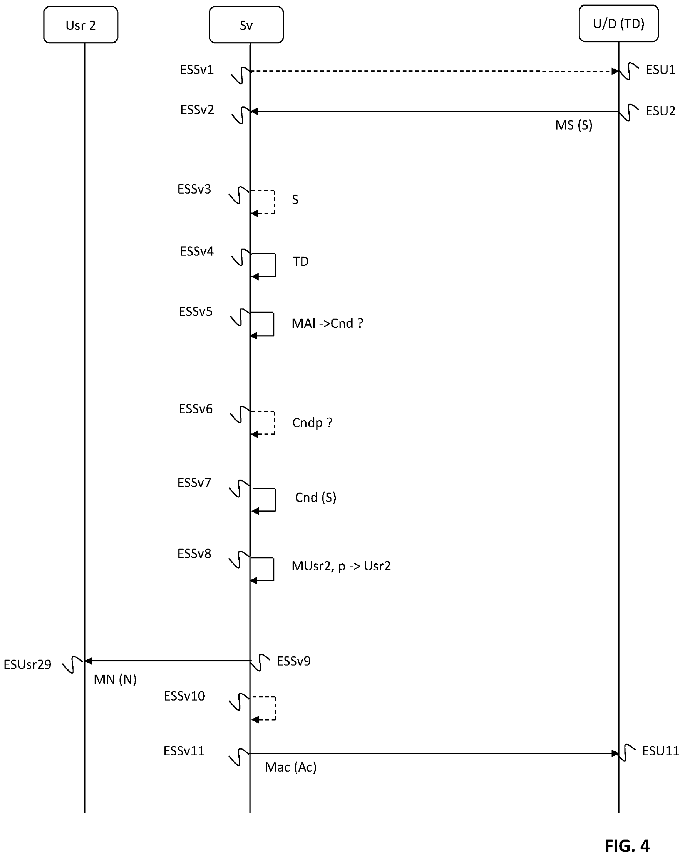

Nous allons à présent décrire un mode de réalisation d'un procédé de supervision d'une installation domotique 17 en référence à la figure 4. Nous supposerons ici que le procédé de configuration tel que décrit à la figure 3 a été précédemment exécuté.

Le procédé de supervision est exécuté par le serveur Sv.

Dans une étape ESSv2, le serveur Sv reçoit un message de supervision MS émis par un dispositif domotique D et relayé par l'unité centrale de commande U dans une étape ESU2, le message de supervision MS comprenant une information relative à une valeur d'au moins un variable d'état S de l'au moins un dispositif domotique D. L'étape ESU2 peut être successive à une première étape ESSv1 d'envoi d'un message d'interrogation ou de polling, reçu par le dispositif domotique D ou l'unité centrale de commande U dans une étape ESU1. On entend ici par polling une scrutation ou interrogation périodique. Alternativement, l'envoi du message MS peut être initié par le dispositif domotique D de façon autonome, par exemple en détectant un évènement modifiant la valeur d'une variable d'état S1D. Le polling peut également être réalisé à l'initiative de l'unité centrale de commande U, avant d'envoyer une notification au Serveur Sv.

Dans une étape ESSv3, le serveur peut réaliser un stockage optionnel des valeurs de l'au moins une variable d'état S. Ce stockage historisé des valeurs de variables d'état peut être utile pour l'évaluation de conditions Cnd portant sur plusieurs variables qui ne sont pas envoyées en même temps, pour mettre en œuvre des algorithmes basés par exemple sur l'évolution des valeurs de la variable d'état S, sur le calcul de grandeurs statistiques, ou encore pour mettre en œuvre un mécanisme d'hystérésis.

Dans une étape ESSv4, le serveur Sv procède à une identification du type DT de dispositif. Cette identification du type peut être basée par exemple sur une consultation d'une information envoyée dans le message de supervision, comme un identifiant. A titre d'exemple les données de l'identifiant unique DURL peuvent être utilisées.

Dans une étape ESSv5, le serveur procède à une détermination des alertes Al présentant une condition Cnd à évaluer, sur la base du type TD du dispositif D. Cette détermination peut être réalisée sur la base des correspondances MAI enregistrées lors de la configuration.

Il est également possible de réduire le nombre de conditions Cnd à évaluer en considérant la ou des variables d'état S concernées par les Condition Cnd et en les comparant avec la variable d'état mise à jour.

Dans une étape ESSv6, le serveur Sv vérifie l'existence d'une « Surcharge », c'est-à-dire qu'il procède à une vérification d'une configuration personnalisée Cndp de l'alerte par dispositif D par un utilisateur du deuxième type Usr2. A titre d'exemple, une modification du seuil Tp peut être réalisée.

Dans une étape ESSv7, le serveur Sv procède à l'évaluation la condition Cnd, pour déterminer si une alerte doit être déclenchée.

Dans le cas où la condition est remplie et une alerte Al est déclenché qui doit être notifiée, cette notification peut être optionnellement associée à un contexte, ou des valeurs à communiquer, et/ou à un niveau d'alerte.

Dans une étape ESSv8, le serveur Sv détermine le ou les utilisateurs de deuxième type Usr2 à notifier en fonction de La correspondance entre le dispositif D / l'installation et l'utilisateur. Par ailleurs, la notification est envoyée ou non en fonction de la configuration propre à l'utilisateur Usr2 qui souhaite ou non recevoir une alerte.

Dans une étape Essv9, le Serveur Sv procède à l'envoi d'au moins un message de notification MN si la détermination de la condition Cnd est positive. Ce message de notification MN est reçu par l'utilisateur dans une étape ESUsr29.

Dans une étape ESSv10, le serveur peut procéder optionnellement à une sauvegarde du déclenchement de l'alerte pour constituer un historique des alertes.

Dans une étape ESSv11, le serveur peut procéder à l'envoi d'un message Mac à l'unité centrale de commande U en vue du déclenchement de l'exécution d'une action Ac, en particulier d'une action sur le dispositif domotique D. Ce message est reçu dans une étape ESU11 par l'unité centrale de commande U. Par action, il peut notamment être entendu une commande sur un dispositif D.

## Exemples de conditions de déclenchement d'alerte

Quelques exemples de conditions Cnd utilisées dans des alertes Al sont décrits ci-dessous.

### *Exemple 1*

Selon un premier exemple, la condition Cnd de déclenchement d'une alerte Al a pour objet la détection de problèmes d'allumage sur un dispositif D constitué par une chaudière domestique.

Ainsi, la condition de déclenchement Cnd peut être définie comme :

$$Na > NaT$$

Avec

Na : Nombre de tentatives consécutives nécessaires pour que la combustion démarre lors du dernier allumage.

NaT : seuil d'alerte, par exemple égal à 3.

Cette condition Cnd définit que si la valeur de Na dépasse le seuil NaT, l'alerte Al est déclenchée.

Ce type de condition Cnd permet de détecter des ratées à l'allumage sur la chaudière, indiquant une usure du système d'allumage nécessitant un remplacement avant aggravation et panne totale.

### *Exemple 2*

Selon un deuxième exemple, la condition Cnd de déclenchement d'une alerte Al a pour objet le suivi du fonctionnement d'un dispositif D constitué par une chaudière domestique.

Ainsi, la condition de déclenchement Cnd peut être définie comme :

*T > $Tmax pendant une période P avec*

T : Température du corps de chauffe. Cette température est une variable d'état ou paramètre du dispositif dont la valeur est rafraîchie toutes les minutes
$TMax : Température seuil. Cette valeur de seuil est une variable externe qui peut par exemple être définie par défaut à une valeur de 90°C par les préconisations du constructeur.
P : période de temps, par exemple de 10 minutes.

La condition ci-dessus utilise un « hystérésis » pendant une période de temps P. Ainsi, si la valeur de T dépasse $TMax sur une période ininterrompue d'au moins P, l'alerte est déclenchée.

### *Exemple 3*

Selon un troisième exemple, la condition Cnd a pour objet la détection d'effort anormal sur un dispositif D constitué par une porte de garage motorisée.
Ainsi, la condition de déclenchement Cnd peut être définie comme :

*Nt > NtT et Im > ImT avec*

Nt : Nombre de cycles d'ouverture/fermeture du dispositif depuis sa sortie d'usine.
$Ntmax : Seuil d'utilisation, par exemple de l'ordre de 100.
Im : Valeur maximum atteinte par l'intensité électrique dans le moteur du dispositif (en ampères) lors du dernier cycle.
$Immax : Seuil d'alerte d'intensité, par exemple égal à 8 A.

La condition Cnd comprend deux sous-conditions cumulatives. La sous-condition sur Nt permet d'éviter des faux positifs pendant la phase d'installation et de rodage du dispositif.
Par la suite, si le dispositif a effectué au moins NtT cycles d'ouverture et que le courant d'appel du moteur électrique dépasse ImT, l'alerte AI est déclenchée.
Ce type de condition Cnd permet de détecter un effort anormal du dispositif pouvant réduire sa durée de vie ou précédant un blocage complet.

### *Exemple 4*

Selon un quatrième exemple, la condition Cnd a pour objet le suivi de consommation d'acide d'un dispositif domotique D de type régulateur automatique de pH pour piscine.
Ainsi, la condition de déclenchement Cnd peut être définie comme :

*d(Qa) > $Cmax pendant une période P avec*

Qa : Quantité d'acide consommée en ml (index absolu, rafraîchi toutes les 30 minutes)
d(Qa) : Taux de consommation d'acide en ml par heure, calculé par dérivée sur les 8 dernières heures (en utilisant les valeurs stockées par le serveur toutes les 30 minutes)
$Cmax : Taux de consommation seuil en ml par heure : variable externe de valeur par défaut = 10mL/h
P : période de temps, par exemple 8 minutes.

Si la consommation en volume d'acide est supérieure à $Cmax ml/h sur les P dernières heures, l'alerte est déclenchée.
Ce type de condition permet de détecter une situation de régulation anormale entrainant une surconsommation, qui peut indiquer un problème de réglage ou une détérioration du dispositif.

### *Configuration personnalisée*

Selon une possibilité, dans les différents exemples décrits ci-dessus, le premier utilisateur du premier type UsrT1 peut définir que les seuils définis sont réglables par un utilisateur du deuxième type UsrT2, par exemple réglables dans une plage de valeurs déterminées par l'utilisateur du premier type UsrT1.

### Revendications

1. Procédé de configuration d'une unité de gestion reliée à au moins une installation domotique (17) comprenant au moins un dispositif domotique (D) et au moins une unité centrale de commande (U), le procédé étant mis en œuvre par l'unité de gestion (Sv) et comprenant les étapes suivantes :

- Configuration (EcfSv2) d'une alerte (AI) correspondant au déclenchement d'une notification (N) et/ou d'une action (Ac) lors de la réalisation d'une condition de déclenchement (Cnd, Cndp) portant sur au moins une variable d'état (S) pour l'au moins un dispositif domotique (D), un groupe de dispositifs domotiques (D), un type de dispositif domotique (DT) ou un groupe de types de dispositifs domotiques (DT) ; l'étape de configuration de l'alerte (AI) étant réalisée sur la base des instructions d'un premier utilisateur (Usr1) possédant un profil utilisateur d'un premier type (UsrT1) ;
- Enregistrement (EcfSv3) d'une première correspondance (MAI) entre ladite alerte (AI) et ledit au moins un dispositif domotique (D), ledit groupe de dispositifs domotiques (D), ledit type de dispositif domotique (DT) ou ledit groupe de types de dispositifs domotiques (DT) ;
- Déclaration (ECfUsr25) de la supervision d'un ensemble (SDS) de dispositifs domotiques (D) comprenant l'au moins un dispositif domotique (D), le groupe de dispositifs domotiques (D), le type de dispositif domotique (DT), ou le groupe de types de dispositifs domotiques (DT), pour lequel l'alerte (AI) a été définie par un deuxième utilisateur (Usr2) possédant un profil utilisateur d'un deuxième type (UsrT2).

2. Procédé de configuration selon la revendication 1, comprenant l'étape suivante :

   - Enregistrement (ECfSv6) d'une deuxième correspondance (MUsr) entre l'au moins un dispositif (D), le groupe de dispositifs domotiques (D), le type de dispositif domotique (DT), ou le groupe de types de dispositifs domotiques (DT), appartenant à l'ensemble (SDS) de dispositifs domotiques (D) et un utilisateur (Usr2).

3. Procédé selon la revendication 1, comprenant en outre l'étape suivante :

   - Définition (ECfUsr27) d'une configuration personnalisée (Cndp) d'une alerte (AI) attachée à un dispositif (D) ou un groupe de dispositif, par le deuxième utilisateur (Usr2) possédant un profil utilisateur d'un deuxième type (UsrT2).

4. Procédé selon la revendication 1, comprenant en outre l'étape suivante :

   - Mise à disposition (EcfSv1) de l'utilisateur (Usr1) possédant un profil d'un premier type (UsrT1) d'une première interface (GUI1) de configuration d'une Alerte (AI) et de la condition de déclenchement correspondante (Cnd).

5. Procédé selon la revendication 1, comprenant en outre l'étape suivante :

   - Mise à disposition (EcfSv4) de l'utilisateur (Usr2) possédant un profil d'un deuxième type (UsrT2) d'une deuxième interface (IN2) de sélection d'installations, de dispositifs / des paramètres ou variables d'état.

6. Procédé de supervision d'une installation domotique (17) comprenant au moins un dispositif domotique (D) et au moins une unité centrale de commande (U), le procédé étant exécuté par une unité de gestion (Sv) reliée à ladite installation (17) et comprenant les étapes suivantes :

   - Réception (ESSv2) d'un message de supervision (MS) en provenance de l'au moins un dispositif domotique (D) et/ou de l'au moins une unité centrale de commande (U), le message de supervision (MS) comprenant une information relative à une valeur d'au moins une variable d'état (S) de l'au moins un dispositif domotique (D) ;
   - Détermination (ESSv5) d'au moins une alerte (AI) présentant une condition de déclenchement (Cnd) à évaluer pour l'au moins un dispositif domotique (D), l'alerte (AI) étant réalisée sur la base des correspondances (MAI) enregistrées lors de la configuration mise en œuvre selon l'une quelconque des revendications 1 à 5 du procédé de configuration ;
   - Evaluation (ESSv7) de la condition de déclenchement (Cnd, Cndp) de l'au moins une alerte (AI) ;
   - Détermination (ESSv8) d'au moins un utilisateur (Usr2) possédant un profil utilisateur d'un deuxième type, à notifier en fonction d'une correspondance entre l'au moins un dispositif (D) et ledit utilisateur (Usr2), dans le cas où la condition de déclenchement (Cnd) est remplie ;
   - Emission (Essv9) d'au moins un message de notification (MN) à destination de l'au moins un utilisateur (Usr2) possédant un profil utilisateur d'un deuxième type, dans le cas où la condition de déclenchement (Cnd) est remplie.

7. Procédé de supervision selon la revendication 6, comprenant une étape d'identification (ESSv4) d'un type (DT) du dispositif domotique (D) concerné par le message de supervision (MS),
Et dans lequel l'étape de détermination (ESSv5) des alertes (AI) présentant une condition (Cnd) à évaluer, est réalisée sur la base du type (TD) du dispositif domotique (D).

8. Procédé de supervision selon l'une des revendications 6 ou 7, dans lequel l'au moins une alerte (AI) est configurée par un premier utilisateur (Usr1) possédant un profil d'un premier type (UsrT1), et l'étape de détermination d'un utilisateur à notifier correspond à la détermination d'un deuxième utilisateur (Usr2) d'un deuxième type (UsrT2).

9. Procédé selon la revendication 4, comprenant l'étape suivante :

   - Envoi (ESSv11) d'un message (Mac) à l'unité centrale de commande U en vue du déclenchement de l'exécution d'une action, en particulier d'une action sur le dispositif domotique (D).

10. Procédé selon l'une des revendications 4 ou 5, comprenant l'étape suivante :

   - Stockage (ESSv3) des valeurs de l'au moins une variable d'état (S).

**11.** Procédé selon l'une quelconque des revendication 4 à 6, comprenant l'étape suivante :

- Vérification (ESSv6) de l'existence d'une configuration personnalisée (Cndp) de l'alerte (AI) par dispositif (D) par un deuxième utilisateur (Usr2) possédant un profil du deuxième type (UsrT2).

**12.** Procédé selon l'une quelconque des revendications 6 ou 7, comprenant l'étape suivante :

- Vérification de l'existence d'une configuration propre à l'utilisateur (Usr2) concernant un souhait de réception de notification afin de déterminer si une notification est envoyée ou non.

**Patentansprüche**

**1.** Verfahren zum Konfigurieren einer Verwaltungseinheit, die mit mindestens einer Heimautomatisierungsanlage (17) verbunden ist, welche mindestens eine Heimautomatisierungsvorrichtung (D) und mindestens eine zentrale Bedieneinheit (U) umfasst, wobei das Verfahren von der Verwaltungseinheit (Sv) umgesetzt wird und die folgenden Schritte umfasst:

- Konfigurieren (EcfSv2) eines Alarms (AI), der dem Auslösen einer Benachrichtigung (N) und/oder einer Aktion (AC) bei Realisierung einer Auslösebedingung (Cnd, Cndp) entspricht, die sich auf mindestens eine Zustandsvariable (S) bezieht, für die mindestens eine Heimautomatisierungsvorrichtung (D), eine Gruppe von Heimautomatisierungsvorrichtungen (D), einen Typ von Heimautomatisierungsvorrichtung (DT) oder eine Gruppe von Heimautomatisierungsvorrichtungstypen (DT); wobei der Schritt des Konfigurierens des Alarms (AI) auf Basis der Anweisungen eines ersten Benutzers (Usr1) realisiert wird, der ein Benutzerprofil eines ersten Typs (UsrT1) besitzt;
- Registrieren (EcfSv3) einer ersten Entsprechung (MAI) zwischen dem Alarm (AI) und der mindestens einen Heimautomatisierungsvorrichtung (D), der Gruppe von Heimautomatisierungsvorrichtungen (D), dem Typ von Heimautomatisierungsvorrichtung (DT) oder der Gruppe von Heimautomatisierungsvorrichtungstypen (DT);
- Anmelden (ECfUsr25) der Überwachung einer Menge (SDS) von Heimautomatisierungsvorrichtungen (D), die die mindestens eine Heimautomatisierungsvorrichtung (D), die Gruppe von Heimautomatisierungsvorrichtungen (D), den Typ von Heimautomatisierungsvorrichtung (DT) oder die Gruppe von Heimautomatisierungsvorrichtungstypen (DT), für die/den der Alarm (AI) definiert wurde, umfasst, durch einen zweiten Benutzer (Usr2), der ein Benutzerprofil eines zweiten Typs (UsrT2) besitzt.

**2.** Konfigurationsverfahren nach Anspruch 1, das den folgenden Schritt umfasst:

- Registrieren (ECfSv6) einer zweiten Entsprechung (MUsr) zwischen der mindestens einen Vorrichtung (D), der Gruppe von Heimautomatisierungsvorrichtungen (D), dem Typ von Heimautomatisierungsvorrichtung (DT) oder der Gruppe von Heimautomatisierungsvorrichtungstypen (DT), die/der zu der Menge (SDS) von Heimautomatisierungsvorrichtungen (D) gehört, und einem Benutzer (Usr2).

**3.** Verfahren nach Anspruch 1, das weiter den folgenden Schritt umfasst:

- Definieren (ECfUsr27) einer benutzerdefinierten Konfiguration (Cndp) eines Alarms (AI), die mit einer Vorrichtung (D) oder einer Gruppe von Vorrichtungen verknüpft ist, durch den zweiten Benutzer (Usr2), der ein Benutzerprofil eines zweiten Typs (UsrT2) besitzt.

**4.** Verfahren nach Anspruch 1, das weiter den folgenden Schritt umfasst:

- Bereitstellen (EcfSv1) einer ersten Schnittstelle (GUI1) zum Konfigurieren eines Alarms (AI) und der entsprechenden Auslösebedingung (Cnd) für den Benutzer (Usr1), der ein Profil eines ersten Typs (UsrT1) besitzt.

**5.** Verfahren nach Anspruch 1, das weiter den folgenden Schritt umfasst:

- Bereitstellen (EcfSv4) einer zweiten Schnittstelle (IN2) zum Auswählen von Anlagen, Vorrichtungen / Parametern oder Zustandsvariablen für den Benutzer (Usr2), der ein Profil eines zweiten Typs (UsrT2) besitzt.

**6.** Verfahren zum Überwachen einer Heimautomatisierungsanlage (17), die mindestens eine Heimautomatisierungsvorrichtung (D) und mindestens eine zentrale Bedieneinheit (U) umfasst, wobei das Verfahren von einer Verwaltungseinheit (Sv) ausgeführt wird, die mit der Anlage (17) verbunden ist, und die folgenden Schritte umfasst:

- Empfangen (ESSv2) einer Überwachungsnachricht (MS) von der mindestens einen Heimautomatisierungsvorrichtung (D) und/oder der mindestens einen zentralen Bedieneinheit (U), wobei die Überwachungsnachricht (MS) eine Information bezüglich eines Werts mindestens einer Zustandsvariablen (S) der mindestens einen Heimautomatisierungsvorrichtung (D) umfasst;
- Bestimmen (ESSv5) mindestens eines Alarms (AI), der eine auszuwertende Auslösebedingung (Cnd) für die mindestens eine Heimautomatisierungsvorrichtung (D) aufweist, wobei der Alarm (AI) auf Basis der Entsprechungen (MAI) realisiert wird, die bei der nach einem der Ansprüche 1 bis 5 des Konfigurationsverfahrens umgesetzten Konfiguration registriert wurden;
- Auswerten (ESSv7) der Auslösebedingung (Cnd, Cndp) des mindestens einen Alarms (AI);
- Bestimmen (ESSv8) mindestens eines Benutzers (Usr2), der ein Benutzerprofil eines zweiten Typs besitzt und der abhängig von einer Entsprechung zwischen der mindestens einen Vorrichtung (D) und dem Benutzer (Usr2) benachrichtigt werden soll, falls die Auslösebedingung (Cnd) erfüllt ist;
- Senden (Essv9) mindestens einer Benachrichtigungsnachricht (MN) an den mindestens einen Benutzer (Usr2), der ein Benutzerprofil eines zweiten Typs besitzt, falls die Auslösebedingung (Cnd) erfüllt ist.

7. Überwachungsverfahren nach Anspruch 6, das einen Schritt des Identifizierens (ESSv4) eines Typs (DT) der Heimautomatisierungsvorrichtung (D), der von der Überwachungsnachricht (MS) betroffen ist, umfasst, und wobei der Schritt des Bestimmens (ESSv5) der Alarme (AI), die eine auszuwertende Bedingung (Cnd) aufweisen, auf Basis des Typs (TD) der Heimautomatisierungsvorrichtung (D) realisiert wird.

8. Überwachungsverfahren nach einem der Ansprüche 6 oder 7, wobei der mindestens eine Alarm (AI) von einem ersten Benutzer (Usr1) konfiguriert wird, der ein Profil eines ersten Typs (UsrT1) besitzt, und der Schritt des Bestimmens eines Benutzers, der benachrichtigt werden soll, dem Bestimmen eines zweiten Benutzers (Usr2) eines zweiten Typs (UsrT2) entspricht.

9. Verfahren nach Anspruch 4, das den folgenden Schritt umfasst:

   - Senden (ESSv11) einer Nachricht (Mac) an die zentrale Bedieneinheit U im Hinblick auf das Auslösen der Ausführung einer Aktion, insbesondere einer Aktion an der Heimautomatisierungsvorrichtung (D).

10. Verfahren nach einem der Ansprüche 4 oder 5, das den folgenden Schritt umfasst:

   - Speichern (ESSv3) der Werte der mindestens einen Zustandsvariablen (S).

11. Verfahren nach einem der Ansprüche 4 bis 6, das den folgenden Schritt umfasst:

   - Überprüfen (ESSv6) des Vorhandenseins einer benutzerdefinierten Konfiguration (Cndp) des Alarms (AI) je Vorrichtung (D) durch einen zweiten Benutzer (Usr2), der ein Profil des zweiten Typs (UsrT2) besitzt.

12. Verfahren nach einem der Ansprüche 6 oder 7, das den folgenden Schritt umfasst:

   - Überprüfen des Vorhandenseins einer dem Benutzer (Usr2) eigenen Konfiguration, die einem Wunsch zum Empfangen einer Benachrichtigung entspricht, um zu bestimmen, ob eine Benachrichtigung gesendet wird oder nicht.

**Claims**

1. A method of configuring a management unit connected to at least one home automation installation (17) comprising at least one home automation device (D) and at least one central control unit (U), the method being implemented by the management unit (Sv) and comprising the following steps:

   - Configuration (EcfSv2) of an alert (AI) corresponding to the triggering of a notification (N) and/or action (Ac) upon fulfillment of a trigger condition (Cnd, Cndp) relating to at least one state variable (S) for the at least one home automation device (D), a group of home automation devices (D), a home automation device type (DT) or a group of home automation device types (DT); the step of configuring the alert (AI) being carried out based on the instructions of a first user (Usr1) having a user profile of a first type (UsrT1);
   - Recording (EcfSv3) of a first correspondence (MAI) between said alert (AI) and said at least one home automation device (D), said group of home automation devices (D), said home automation device type (DT) or said group of home automation device types (DT);
   - Declaration (ECfUsr25) of the supervision of a set (SDS) of home automation devices (D) comprising the at least one home automation device (D), the group of home automation devices (D), the home automation device type (DT), or the group of home automation device types (DT), for which the alert (AI) has been defined by a second user (Usr2) having a user profile of a second type (UsrT2).

**2.** The configuration method according to claim 1, comprising the following step:

- Recording (ECfSv6) of a second correspondence (MUsr) between the at least one device (D), the group of home automation devices (D), the home automation device type (DT), or the group of home automation device types (DT), belonging to the set (SDS) of home automation devices (D) and a user (Usr2).

**3.** The method according to claim 1, further comprising the following step:

- Definition (ECfUsr27) of a customized configuration (Cndp) of an alert (AI) related to a device (D) or a group of devices, by the second user (Usr2) having a user profile of a second type (UsrT2).

**4.** The method according to claim 1, further comprising the following step:

- Provision (EcfSv1) of the user (Usr1) having a profile of a first type (UsrT1) with a first interface (GUI1) for configuring an alert (AI) and the corresponding trigger condition (Cnd).

**5.** The method according to claim 1, further comprising the following step:

- Provision (EcfSv4) of the user (Usr2) having a profile of a second type (UsrT2) with a second interface (IN2) for selecting installations, devices/parameters or state variables.

**6.** A method for supervising a home automation installation (17) comprising at least one home automation device (D) and at least one central control unit (U), the method being executed by a management unit (Sv) connected to said installation (17) and comprising the following steps:

- Reception (ESSv2) of a supervision message (MS) originating from the at least one home automation device (D) and/or from the at least one central control unit (U), the supervision message (MS) comprising information relating to a value of at least one state variable (S) of the at least one home automation device (D);
- Determination (ESSv5) of at least one alert (AI) having a trigger condition (Cnd) to be assessed for the at least one home automation device (D), the alert (AI) being carried out based on the correspondences (MAI) recorded during the configuration implemented according to any one of claims 1 to 5 of the configuration method;
- Assessment (ESSv7) of the trigger condition (Cnd, Cndp) of the at least one alert (AI);
- Determination (ESSv8) of at least one user (Usr2) having a user profile of a second type, to be notified depending on a correspondence between the at least one device (D) and said user (Usr2), in the case where the trigger condition (Cnd) is met;
- Emission (Essv9) of at least one notification message (MN) to the at least one user (Usr2) having a user profile of a second type, in the case where the trigger condition (Cnd) is met.

**7.** The supervision method according to claim 6, comprising a step of identification (ESSv4) of a type (DT) of the home automation device (D) concerned by the supervision message (MS),
and wherein the step of determination (ESSv5) of the alerts (AI) having a condition (Cnd) to be assessed, is carried out based on the type (TD) of the home automation device (D).

**8.** The supervision method according to any of claims 6 or 7, wherein the at least one alert (AI) is configured by a first user (Usr1) with a profile of a first type (UsrT1), and the step of determination of a user to be notified corresponds to the determination of a second user (Usr2) of a second type (UsrT2).

**9.** The method according to claim 4, comprising the following step:

- Sending (ESSv11) of a message (Mac) to the central control unit U for triggering of the execution of an action, in particular an action on the home automation device (D).

**10.** The method according to any of claims 4 or 5, comprising the following step:

- Storage (ESSv3) of the values of the at least one state variable (S).

**11.** The method according to any one of claims 4 to 6, comprising the following step:

- Check-up (ESSv6) of the existence of a customized configuration (Cndp) of the alert (AI) per device (D) by a second user (Usr2) having a profile of the second type (UsrT2).

**12.** The method according to any one of claims 6 or 7, comprising the following step:

- Check-up of the existence of a configuration specific to the user (Usr2) concerning a wish to receive a notification in order to determine whether a notification is sent or not.

**Fig. 1**

FIG. 2

FIG. 3

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009062964 A1
- US 8781633 B2